(19)

**Europäisches Patentamt**

**European Patent Office**

**Office européen des brevets**

(11) **EP 1 134 878 A1**

(12) **DEMANDE DE BREVET EUROPEEN**

(43) Date de publication:
**19.09.2001 Bulletin 2001/38**

(51) Int Cl.$^7$: **H02M 1/12**

(21) Numéro de dépôt: **00870042.9**

(22) Date de dépôt: **13.03.2000**

(84) Etats contractants désignés:
**AT BE CH CY DE DK ES FI FR GB GR IE IT LI LU
MC NL PT SE**
Etats d'extension désignés:
**AL LT LV MK RO SI**

(71) Demandeur: **ALSTOM BELGIUM S.A.
6001 Charleroi (BE)**

(72) Inventeur: **Bou Saada, Johnny
B-1190 Bruxelles (BE)**

(74) Mandataire: **Van Malderen, Joelle et al
Office Van Malderen,
Place Reine Fabiola 6/1
1083 Bruxelles (BE)**

(54) **Procédé et dispositif de réduction d'harmonique dans les convertisseurs de puissance**

(57) La présente invention se rapporte à un procédé de réduction des amplitudes des harmoniques indésirables générés dans un convertisseur de puissance à plusieurs étages de commutation, caractérisé en ce que les commutateurs d'au moins un desdits étages sont commandés par des impulsions de fréquence variable.

La présente invention se rapporte également au dispositif utilisé pour la mise en oeuvre de ce procédé.

FIG. 3

EP 1 134 878 A1

**Description**

**Objet de l'invention**

La présente invention se rapporte à un procédé de réduction d'harmoniques gênants générés dans un convertisseur de puissance.

La présente invention se rapporte également au dispositif pour la mise en oeuvre de ce procédé.

**Etat de la technique**

L'électronique de puissance travaille généralement en commutations, ce qui provoque la création d'harmoniques. De plus, un système de puissance est constitué de sous-systèmes travaillant chacun à une fréquence propre. La combinaison de ces différentes fréquences est la source d'harmoniques par phénomène de battement.

Un battement est la variation périodique de l'amplitude d'une oscillation résultant de la superposition de deux fréquences voisines.

Généralement, on essaie de découpler ces sous-systèmes par l'utilisation de filtres comportant des selfs (L) et des capacités (C).

Dans le cas des onduleurs triphasés pour moteurs à propulsion dans les applications ferroviaires, par exemple, il a été par ailleurs proposé un traitement des ondes PWM par correction de consigne dans un discriminateur (publication WO96/33548). Ce procédé permet d'annuler les temps morts au niveau des consignes de commutation et donc de réduire significativement les harmoniques indésirables, en particulier, les harmoniques d'ordre 5 et 7 apparaissant dans les courants moteur et l'harmonique d'ordre 6 apparaissant côté alimentation et côté couple moteur.

Toutefois la modification de configuration du système est souvent limitée par les pertes des semiconducteurs ou encore par la physique du système.

**Buts de l'invention**

La présente invention vise à proposer un procédé qui permette de réduire, voire annuler, les harmoniques provenant de la composition des différentes fréquences de commutation dans les convertisseurs de puissance à plusieurs étages.

La présente invention vise en particulier à proposer un procédé qui puisse être appliqué à un système comportant au moins deux des sous-sytèmes fonctionnels suivants : filtre, redresseur, hacheur de freinage rhéostatique, onduleur.

**Principaux éléments caractéristiques de l'invention**

La présente invention se rapporte à un procédé de réduction des amplitudes des harmoniques indésirables dans les convertisseurs de puissance à plusieurs étages de commutation, caractérisé en ce que le(s) commutateur (s) d'au moins un desdits étages est(sont) commandé(s) par des impulsions de fréquence variable.

Avantageusement, la fréquence est aléatoire et suit de préférence une distribution gaussienne ou non gaussienne, dont la moyenne correspond à la fréquence fixe utilisée habituellement pour commander le(s) commutateur (s) considéré(s).

De manière particulièrement avantageuse, l'écart-type de la distribution de fréquence est compris entre 15 et 35 % de la fréquence moyenne.

Selon une forme d'exécution préférée de l'invention, on commande avec des impulsions de fréquence aléatoire le système de commutation de puissance constitué par un hacheur de freinage rhéostatique, suivi d'un onduleur triphasé trois niveaux. Dans cet exemple, la fréquence moyenne de commande du hacheur est comprise entre 600 et 900 Hz et l'écart-type est compris entre 150 et 250 Hz.

La présente invention se rapporte également à un dispositif électronique de commutation de puissance à plusieurs étages, pour la mise en oeuvre d'un procédé de réduction des amplitudes des harmoniques indésirables, caractérisé en ce que le(s) commutateur(s) d'au moins un desdits étages est (sont) commandé(s) par des impulsions de fréquence aléatoire, cette fréquence obéissant de préférence à une distribution de Gauss, dont l'écart-type est compris entre 15 et 35% de la fréquence moyenne.

Selon une forme particulièrement préférée de l'invention, le dispositif de commutation de puissance est constitué successivement d'un filtre d'entrée, d'un hacheur de freinage rhéostatique et d'un onduleur à trois niveaux, l'onduleur étant directement accolé au hacheur, sans la présence d'un pont diviseur capacitif intermédiaire.

## Brève description des dessins

La figure 1 représente le schéma de principe d'un convertisseur à deux étages comportant successivement un hacheur de freinage rhéostatique et un onduleur trois niveaux.

La figure 2 représente une forme d'onde appliquée à la commande d'un onduleur, avec trois angles de commutation $\alpha_1$, $\alpha_2$, $\alpha_3$.

La figure 3 représente le signal de commande, avec son signal de consigne, appliqué au hacheur de freinage rhéostatique selon l'invention.

## Description d'une forme d'exécution préférée de l'invention

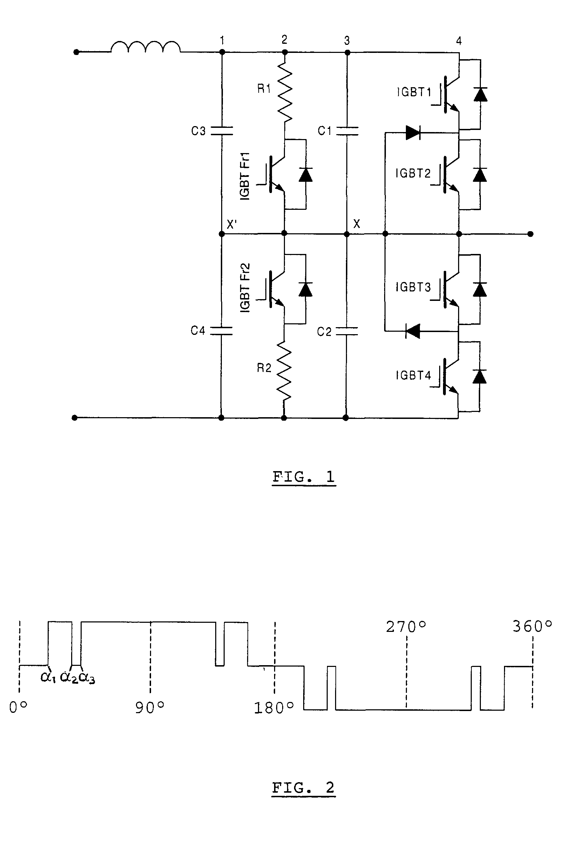

Prenons le cas d'un système hacheur - onduleur trois niveaux comme décrit à la Figure 1. La haute tension continue de la caténaire (HT), de l'ordre de 3 kV, est appliquée via un filtre d'entrée 1 (self, C3, C4) au hacheur de freinage 2. Le hacheur est suivi de l'onduleur à trois niveaux 4 qui débite un courant alternatif triphasé sur une charge de type moteur synchrone ou asynchrone par exemple. Les commutateurs du hacheur et de l'onduleur sont généralement des IGBT. On a également représenté le diviseur capacitif 3 (C1, C2) en parallèle sur l'onduleur 4.

Le montage de base du hacheur est un commutateur (IGBT Fr1, IGBT Fr2) en série avec une résistance (R1, R2). Celui-ci permet de dissiper l'énergie qui n'est pas consommée par la charge. Pour assurer la tenue en tension, HT est réparti en fait sur deux IGBT au moyen du diviseur capacitif 1 qui permet de bloquer le point milieu X' à exactement la moitié de HT.

L'onduleur trois niveaux permet également de répartir HT sur deux commutateurs IGBT, en faisant conduire les IGBT par paire, d'abord les deux supérieurs (IGBT1, IGBT2), ensuite les deux intermédiaires (IGBT2, IGBT3) et enfin les deux inférieurs (IGBT3, IGBT4). En outre, on procède ainsi à l'approximation d'une sinusoïde par trois niveaux de tension : HT, HT/2 et 0. Un deuxième diviseur capacitif est donc nécessaire pour la fixation du potentiel intermédiaire et donc pour le bon fonctionnement de l'onduleur. Il est à noter que la liaison entre les points milieux X, X' des deux diviseurs capacitifs est également nécessaire pour une bonne répartition de HT.

Par rapport à un onduleur à deux niveaux, le système à trois niveaux permet déjà de réduire le taux d'harmoniques, de par une meilleure approximation de la sinusoïde.

Comme la tension fournie par l'onduleur à la charge est symétrique par rapport à l'axe Oy, le développement en série de Fourier ne comporte que la fondamentale et des harmoniques impairs (ordre 3, 5, 7, 9, etc.) :

$$HT(t) = \alpha_1 \sin(\omega t + \phi_1) + \alpha_3 \sin(3\omega t + \phi_3) + \alpha_5 \sin(5\omega t + \phi_5) + ...$$

où t est le temps, $\omega$ la fréquence angulaire fondamentale et $\phi_{2i-1}$ la phase correspondant à la fréquence $(2i-1)\,\omega$, i = 1, 2, 3, ....

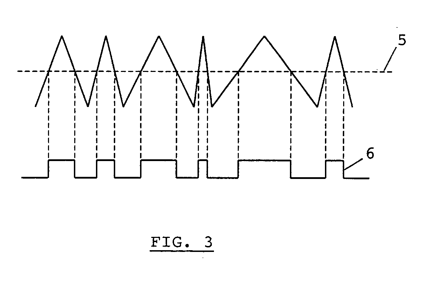

On peut montrer qu'il est possible d'obtenir un système de n équations linéaires à n inconnues où les coefficients $a_3$, $a_5$, $a_{7,\,...}$ sont exprimés en fonction des angles de commutation $\alpha_1$, $\alpha_2$, $\alpha_{3,\,...}$. A la figure 2, on a représenté une forme d'onde correspondant à trois angles de commutation $\alpha_1$, $\alpha_2$, $\alpha_3$.

En inversant le système d'équations, on peut alors exprimer les angles de commutation $\alpha_1$, $\alpha_2$, $\alpha_{3,\,...}$ en fonction des coefficients du développement en série de Fourier $a_3$, $a_5$, $a_{7,\,...}$

Il est donc possible de calculer les angles de commutation requis pour annuler certains harmoniques, choisis au départ. En d'autres termes, le choix judicieux de la forme d'onde appliquée au sous-système onduleur permet d'éliminer, côté moteur, certains harmoniques, et en particulier les plus indésirables tels que les harmoniques d'ordre 5 et 7. Les harmoniques d'ordre 3 et multiples de 3 ne sont pas gênants côté moteur car on a affaire ici à un système triphasé à neutre isolé.

Si la connexion X, X' n'existe pas, le problème de battement n'existe pas non plus. Habituellement cependant, on essaie de ne pas incorporer le banc de capacités 3 (C1, C2) et, dans la mesure du possible, d'avoir le hacheur de freinage directement connecté à l'onduleur. Ainsi, le battement est inévitable et peut être supprimé de la façon décrite ci-dessous.

En fonctionnement normal, l'onduleur génère donc au point milieu X, X' des harmoniques dont les fréquences sont des multiples de 3 de la fréquence de travail. Par exemple, si l'onduleur fonctionne à 50 Hz, on retrouve au point milieu les fréquences 150, 300, 450 Hz, etc.

Dans notre exemple de la figure 1, le hacheur de freinage, accolé directement à l'onduleur, fonctionne à sa propre fréquence (par exemple 800 Hz). Cette fréquence est susceptible de se combiner avec tous les harmoniques présents au point milieu pour former un battement. Ce battement est bien sûr d'autant plus intense que les fréquences sont proches.

En effet, si fl est la fréquence harmonique de l'onduleur et f2 la fréquence du hacheur, on obtient deux battements de fréquence (f1+f2)/2 et (f1-f2)/2.

Pour contrer ce phénomène, nous proposons d'utiliser une fréquence aléatoire pour la commande du hacheur. La distribution de cette fréquence est par exemple une distribution gaussienne de valeur moyenne égale à la fréquence habituelle de travail $f_0$ = 800 Hz et présentant un écart-type de l'ordre de $\Delta f$ = 200 Hz. La figure 3 donne un exemple de signal de commande 6 des IGBT de hachage (IGBT Fr1, IGBT Fr2), à fréquence aléatoire. La consigne 5 donne le niveau du taux de modulation appliqué au hacheur.

Une forme d'exécution préférée de l'invention consiste à générer un signal d'entrée qui est un échantillonnage d'une fonction sinus sur un intervalle de temps fini (par ex. 1 échantillon toutes les 10 ms sur un intervalle d'une seconde) et dont la fréquence change au cours du temps en utilisant un générateur de nombre aléatoire.

Par rapport à la fréquence unique, les pertes de commutation dans les composants de puissance sont les mêmes.

La solution préconisée par l'invention a cependant plusieurs avantages importants :

- réduction des battements d'autant plus marquée que l'écart-type est grand ;
- diminution du bruit du système ;
- suppression possible du diviseur capacitif entre le hacheur et l'onduleur.

**Revendications**

1. Procédé de réduction des amplitudes des harmoniques indésirables générés dans un convertisseur de puissance à plusieurs étages de commutation, **caractérisé en ce que** les commutateurs d'au moins un desdits étages sont commandés par des impulsions de fréquence variable.

2. Procédé selon la revendication 1, **caractérisé en ce que** la fréquence est aléatoire.

3. Procédé selon la revendication 2, **caractérisé en ce que** la fréquence aléatoire obéit à une distribution de Gauss de fréquence moyenne égale à la fréquence utilisée pour un dispositif équivalent à fréquence fixe.

4. Procédé selon la revendication 2, **caractérisé en ce que** la fréquence aléatoire obéit à une distribution non gaussienne.

5. Procédé selon l'une quelconque des revendications précédentes, **caractérisé en ce que** l'écart-type de la distribution est compris entre 15 et 35 % de la fréquence moyenne.

6. Dispositif électronique de commutation de puissance à plusieurs étages, pour la mise en oeuvre du procédé selon l'une quelconque des revendications précédentes et comprenant au moins un filtre d'entrée, un hacheur de freinage rhéostatique et un onduleur à trois niveaux, constitué de commutateurs, **caractérisé en ce que** l'onduleur est directement accolé au hacheur sans la présence d'un pont diviseur capacitif intermédiaire.

FIG. 1

FIG. 2

FIG. 3

**Office européen des brevets**

# RAPPORT DE RECHERCHE EUROPEENNE

Numéro de la demande

EP 00 87 0042

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 638 417 A (HUBERT C. MARTIN ET AL.) 20 janvier 1987 (1987-01-20) * abrégé * * colonne 1, ligne 6 - ligne 10 * * colonne 1, ligne 49 - ligne 58 * * colonne 2, ligne 39 - colonne 3, ligne 14 * | 1-5 | H02M1/12 |
| X | DE 196 51 281 A (STILL GMBH) 25 juin 1998 (1998-06-25) * abrégé * * colonne 1, ligne 64 - colonne 2, ligne 12 * | 1-4 | |
| X | DE 39 12 706 A (SIEMENS) 25 octobre 1990 (1990-10-25) * abrégé * * colonne 2, ligne 35 - ligne 42 * * colonne 2, ligne 51 - colonne 3, ligne 3 * * colonne 3, ligne 13 - ligne 22 * | 1-5 | |
| | | | DOMAINES TECHNIQUES RECHERCHES (Int.Cl.7) |
| X | GB 2 232 835 A (CHLORIDE GROUP) 19 décembre 1990 (1990-12-19) * abrégé * * figures 1,3 * * page 2, ligne 10 - page 3, ligne 15 * | 1-5 | H02M |
| X | US 4 339 697 A (JAMES H. FRANZ) 13 juillet 1982 (1982-07-13) * abrégé * * figure 4 * * colonne 1, ligne 54 - ligne 68 * * figures 1,2 * | 1-5 | |

-/--

~~Le présent rapport a été établi pour toutes les revendications~~

| Lieu de la recherche | Date d'achèvement de la recherche | Examinateur |
|---|---|---|
| LA HAYE | 16 août 2000 | LUND M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**
**des brevets**

Numéro de la demande

EP 00 87 0042

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-5

**Office européen des brevets**

## RAPPORT DE RECHERCHE EUROPEENNE

Numéro de la demande

EP 00 87 0042

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 3 579 091 A (PATRICK W. CLARKE ET AL.) 18 mai 1971 (1971-05-18) * abrégé * * colonne 1, ligne 46 - ligne 64 * --- | 1 | |
| X | US 4 190 882 A (ARTHUR C. CHEVALIER ET AL.) 26 février 1980 (1980-02-26) * abrégé * ----- | 1 | |

DOMAINES TECHNIQUES RECHERCHES (Int.Cl.7)

~~Le présent rapport a été établi pour toutes les revendications~~

| Lieu de la recherche | Date d'achèvement de la recherche | Examinateur |
|---|---|---|
| LA HAYE | 16 août 2000 | LUND M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Office européen
des brevets

## ABSENCE D'UNITÉ D'INVENTION
## FEUILLE SUPPLÉMENTAIRE B

Numéro de la demande

EP 00 87 0042

La division de la recherche estime que la présente demande de brevet européen ne satisfait pas à l'exigence relative à l'unité d'invention et concerne plusieurs inventions ou pluralités d'inventions, à savoir :

1. revendications: 1-5

   Procédé de réduction des amplitudes des harmoniques indésirables générés dans un convertisseur de puissance, avec une distribution de frequence aléatoire, Gaussienne ou non Gausienne.

2. revendication : 6

   Procédé de réduction des amplitudes des harmoniques indésirables générés dans un convertisseur de puissance, avec un filtre d'entrée, un hacheur de freinage rhéostatique, un onduleur à trois niveaux constitué de commutateurs et avec l'onduleur directement accolé au hacheur sans la présence d'un pont diviseur capacitif intermédiaire.

EPO FORM P0402

**ANNEXE AU RAPPORT DE RECHERCHE EUROPEENNE
RELATIF A LA DEMANDE DE BREVET EUROPEEN NO.**     EP 00 87 0042

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2000

| Document brevet cité au rapport de recherche | | Date de publication | Membre(s) de la famille de brevet(s) | | Date de publication |
|---|---|---|---|---|---|
| US 4638417 | A | 20-01-1987 | AUCUN | | |
| DE 19651281 | A | 25-06-1998 | AUCUN | | |
| DE 3912706 | A | 25-10-1990 | AUCUN | | |
| GB 2232835 | A | 19-12-1990 | CA | 2051402 A | 08-10-1990 |
| | | | EP | 0466757 A | 22-01-1992 |
| | | | WO | 9012446 A | 18-10-1990 |
| | | | JP | 4504496 T | 06-08-1992 |
| US 4339697 | A | 13-07-1982 | BE | 888791 A | 13-11-1981 |
| | | | BR | 8102896 A | 02-02-1982 |
| | | | CA | 1152611 A | 23-08-1983 |
| | | | ES | 502115 D | 01-10-1982 |
| | | | ES | 8300211 A | 01-01-1983 |
| | | | FR | 2482798 A | 20-11-1981 |
| | | | IT | 1146870 B | 19-11-1986 |
| | | | JP | 57006501 A | 13-01-1982 |
| | | | KR | 8500314 B | 18-03-1985 |
| US 3579091 | A | 18-05-1971 | AUCUN | | |
| US 4190882 | A | 26-02-1980 | AUCUN | | |

EPO FORM P0460

Pour tout renseignement concernant cette annexe : voir Journal Officiel de l'Office européen des brevets, No.12/82